# EUROPÄISCHE PATENTSCHRIFT

(11) **EP 1 718 480 B1**
(45) Veröffentlichungstag und Bekanntmachung des Hinweises auf die Patenterteilung: **14.10.2009**
(21) Anmeldenummer: 04804935.7
(22) Anmeldetag: 20.12.2004
(51) Int. Cl.: B60C 15/06

(54) **FAHRZEUGLUFTREIFEN**
PNEUMATIC TIRE FOR VEHICLE
PNEU DE VEHICULE

(30) Priorität: 20.02.2004 DE 102004008308
(43) Veröffentlichungstag der Anmeldung: 08.11.2006
(73) Patentinhaber: Continental Aktiengesellschaft, 30165 Hannover (DE)
(72) Erfinder: ROPPITSCH, Wolfgang, 30539 Hannover (DE); JENKE, Roland, 29693 Hademstorf (DE); NEUMANN, Axel, 31559 Hohnhorst (DE); SEEVERS, Jörn, 31303 Burgdorf (DE)
(74) Vertreter: Finger, Karsten
(86) Internationale Anmeldenummer: PCT/EP2004/053599
(87) Internationale Veröffentlichungsnummer: WO 2005/090100

(56) Entgegenhaltungen:
- EP-A- 1 083 065
- EP-A- 1 129 870
- EP-A- 1 174 289
- US-A- 3 904 463
- US-A1- 2001 010 246

## Beschreibung

Die Erfindung betrifft einen Fahrzeugluftreifen mit einer Radialkarkasse, zwei Seitenwänden und zwei Wulstbereichen mit Wulstkernen sowie Kernprofilen, wobei der Wulstbereich in Umfangsrichtung des Fahrzeugluftreifens mit einem Wulstverstärker aus Festigkeitsträgern verstärkt ist. Die Erfindung betrifft ferner ein Verfahren zur Herstellung eines derartigen Fahrzeugluftreifens.

Wulstverstärker in den Wulstbereichen von Fahrzeugluftreifen dienen u.a. dazu, Ablösungserscheinungen der umgeschlagenen Endabschnitte der Karkasse aufgrund der höheren Beanspruchungen in diesen Bereichen beim Fahrbetrieb zu verhindern.

Ein Fahrzeugluftreifen obiger Art ist aus der DE 32 34 889 A1 bekannt. Der in jedem Wulstbereich vorgesehene Wulstverstärker besteht aus mehreren im Kreuzverband aneinander liegenden Lagen aus zugfesten textilen Festigkeitsträgern, die unter einem Winkel von 15° bis 50° zur Reifenumfangsrichtung verlaufen. Sämtliche Wulstverstärkerlagen sind an der Außenseite der Radialkarkasse angeordnet. Bei einer der Ausführungsformen besteht der Wulstverstärker aus drei Gewebelagen, von welchen die axial am weitesten außen befindliche Lage vollständig um den Wulstkern herumgeführt ist.

Aus der US 4,852,626 A ist es bekannt, eine Wulstverstärkerlage bestehend aus in einem Gummistreifen eingebetteten Stahlcorden zwischen einem radial außerhalb der Wulstkeme verlaufendem Kernprofil und dem vom Gürtel kommenden Bereich der Karkasslage anzuordnen.
Die EP1174289A1 offenbart ebenfalls einen Fahrzeugreifen mit einem speziellen Wulstverstärker.

Bei der herkömmlichen Reifenherstellung besteht der Wulstverstärker aus einem Gummistreifen, in den Festigkeitsträger parallel angeordnet sind. Ein solcher Wulstverstärker wird auf der Reifenaufbautrommel an den entsprechenden Stellen auf den herzustellenden Reifen gewickelt, wobei an der Übergangsstelle der beiden Gummistreifenenden zwangsläufig eine Diskontinuität in Form einer Lücke entsteht. Dieser sogenannte Splice an der Übergangsstelle hat eine Ungleichförmigkeit im Festigkeitsverhalten des Luftreifens zur Folge, da der Verlauf der Festigkeitsträger an der Übergangsstelle unterbrochen ist. Im Fahrbetrieb des Luftreifens führt dieser Splice zu einer Ungleichförmigkeit, die insbesondere den Rundlauf des Reifens beeinträchtigen kann.

Der Erfindung liegt daher die Aufgabe zu Grunde, einerseits eine möglichst einfache Wulstverstärkerkonstruktion aufzufinden, mit der die Fahreigenschaften des Luftreifens optimiert werden und andererseits die Fertigung des Reifens zu vereinfachen.

Gelöst wird die Aufgabe gemäß Anspruch 1.

Ein Vorteil des erfindungsgemäßen Wulstverstärkers ist insbesondere darin zu sehen, dass nunmehr der Wulstverstärker ohne einen Splice bzw. einer abrupten Übergangsstelle auskommen kann. Das erfindungsgemäße Verfahren gemäß dem nebengeordneten Anspruch 11 ermöglicht ein direktes Aufwickeln des Festigkeitsträgers auf das Kernprofil. Dadurch lässt sich die Reifenherstellung insgesamt rationalisieren, da der Verfahrensschritt des Auflegens des Wulstverstärkers auf der Reifenaufbautrommel entfällt. Da der Wulstverstärker im Reifen keinen Splice mehr aufweist, ist der Rundlauf des Reifens gleichförmiger. Dadurch werden die Fahreigenschaften des Reifens wesentlich verbessert.

In einer vorteilhaften Weiterbildung der Erfindung ist vorgesehen, dass der Festigkeitsträger in Form einer aufgewickelten Spirale am Kernprofil anliegt. Diese Form der Aufwicklung auf dem Kernprofil lässt sich einfach realisieren. Ferner wird dadurch ein Wulstverstärker mit einer hohen Gleichförmigkeit erreicht.

In einer weiteren vorteilhaften Weiterbildung der Erfindung ist vorgesehen, dass der Steigungswinkel der Spirale im radial innenliegenden Bereich kleiner ist als im radial außenliegenden Bereich der Spirale. Dadurch lässt sich der Wulstverstärker an die unterschiedlichen Belastungen im Wulstbereich anpassen.

In einer weiteren vorteilhaften Weiterbildung der Erfindung ist vorgesehen, dass der Festigkeitsträger in Form von aufgewickelten Ellipsen am Kernprofil anliegt. Das ellipsenartige Aufwickeln bietet Vorteile bei der Fertigung und steigert das Festigkeitsverhalten des Wulstverstärkers.

In einer weiteren vorteilhaften Weiterbildung der Erfindung ist vorgesehen, dass der Festigkeitsträger in Form einer aufgewickelten Spule am Kernprofil anliegt. Das spulenartige Aufwickeln bietet Vorteile bei der Herstellung des Wulstverstärkers und kann die Fahreigenschaften von einzelnen Reifentypen verbessern.

In einer weiteren vorteilhaften Weiterbildung der Erfindung ist vorgesehen, dass der Festigkeitsträger diskontinuierlich in einzelnen Festigkeitsträger-Abschnitten am Kernprofil anliegt. Eine solche Realisierung des Wulstverstärkers führt bei speziellen Reifentypen zu einer Verbesserung der Fahreigenschaften.

In einer weiteren vorteilhaften Weiterbildung der Erfindung ist vorgesehen, dass die Festigkeitsträger-Abschnitte mit regelmäßig angeordneten Lücken auf dem Kernprofil angeordnet sind. Da die Lücken insgesamt regelmäßig angeordnet sind, wird der Rundlauf des Luftreifens nicht beeinträchtigt.

In einer weiteren vorteilhaften Weiterbildung der Erfindung ist vorgesehen, dass die Festigkeitsträger-Abschnitte an den Übergängen überlappend auf dem Kernprofil angeordnet sind. Die regelmäßige Überlappung der Festigkeitsträgerabschnitte führt insgesamt zu einem Ausgleich, wodurch der Rundlauf des Reifens nicht beeinträchtigt wird.

In einer weiteren vorteilhaften Weiterbildung der Erfindung ist vorgesehen, dass der Festigkeitsträger auf einer faserverstärkten Gummilage angeordnet ist. Die faserverstärkte Gummilage führt dazu, dass der Wulstbereich in diesen Bereich zusätzlich stabilisiert wird.

In einer weiteren vorteilhaften Weiterbildung der Erfindung ist vorgesehen, dass der Wulstverstärker im Wulstbereich zwischen zwei Karkasslagen angeordnet ist. Eine solche Anordnung des Wulstverstärkers führt zu einer hohen Stabilisierung des Wulstbereiches.

Anhand mehrerer Ausführungsbeispiele soll die Erfindung näher erläutert werden. Es zeigen:
- Fig. 1:: einen herkömmlichen Luftreifen
- Fig. 2 - 5:: verschiedene Lagemöglichkeiten des erfindungsgemäßen Wulstverstärkers
- Fig. 6:: ein Ausführungsbeispiel, bei dem der Wulstverstärker auf einem Gummistreifen angeordnet ist
- Fig. 7:: ein Ausführungsbeispiel mit einem Wulstverstärker, bei dem der Festigkeitsträger in Form einer Spirale auf dem Kernprofil aufgewickelt ist
- Fig. 8:: ein Ausführungsbeispiel mit einem Wulstverstärker, bei dem der Festigkeitsträger in Form von Ellipsen auf dem Kernprofil aufgewickelt ist
- Fig. 9:: ein Ausführungsbeispiel mit einem Wulstverstärker, bei dem der Festigkeitsträger in Form einer Spule auf dem Kernprofil aufgewickelt ist
- Fig. 10:: ein Auführungsbeispiel mit einem Wulstverstärker, der aus ungeordneten Festigkeitsträgern-Abschnitten besteht
- Fig. 11:: ein Ausführungsbeispiel mit einem Wulstverstärker, der aus geordneten Festigkeitsträgern-Abschnitten besteht
- Fig. 12:: ein Ausführungsbeispiel, bei dem die Festigkeitsträger-Abschnitte überlappend angeordnet sind.

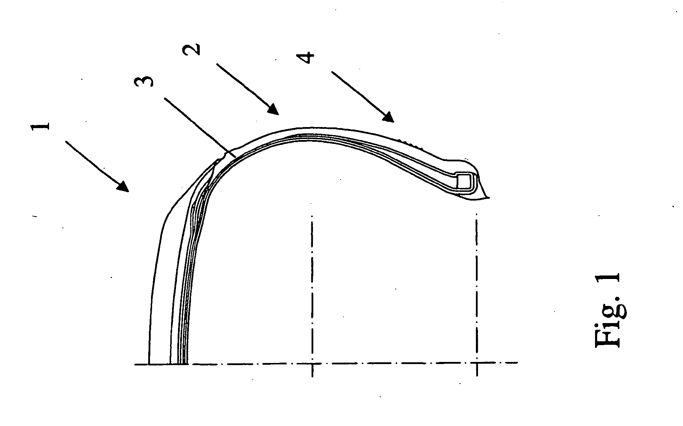

Die Figur 1 zeigt einen herkömmlichen Luftreifen 1 mit einer Seitenwand 2, einer Reifenkarkasse 3 und einen Wulstbereich 4, in dem der erfindungsgemäße Wulstverstärker angeordnet ist.

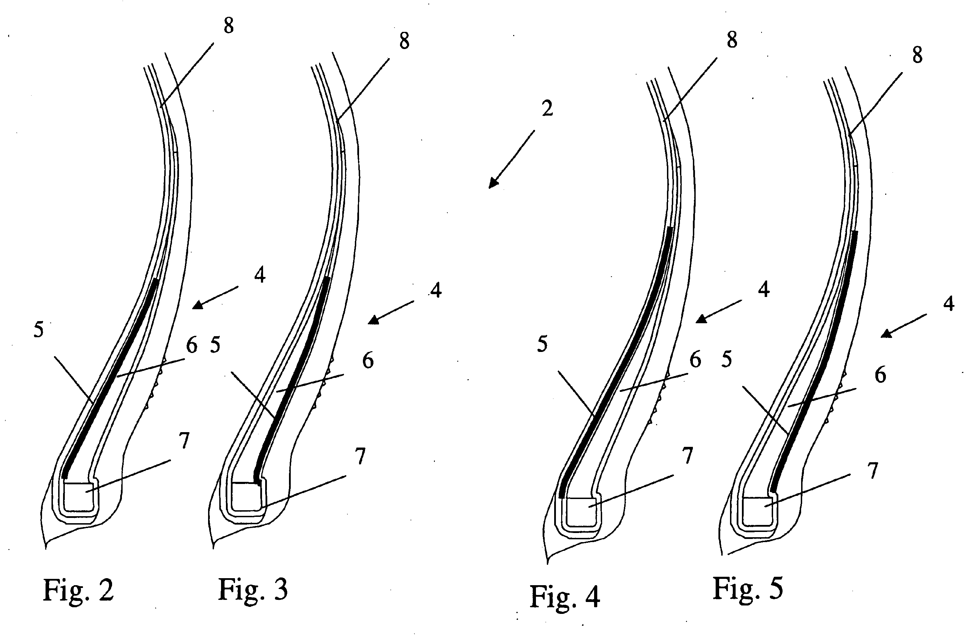

Die Figur 2 bis 5 zeigen verschiedene Lagemöglichkeiten des erfindungsgemäßen Wulstverstärkers 5. Der Wulstverstärker 5, der aus einem drahtförmigen Festigkeitsträger besteht, ist in dem Ausführungsbeispiel in Figur 2 direkt auf der Innenseite des Kernprofiles 6 angeordnet. Das Kernprofil 6 sitzt auf dem Wulstkern 7 auf, wobei die Reifenkarkasse 8 im Wulstbereich 4 um beide Bauteile 6 und 7 herumgeführt wird.

Figur 3 zeigt ein Ausführungsbeispiel, bei dem der Wulstverstärker 5 auf der Außenseite des Kernprofiles 6 anliegt.

Figur 4 zeigt ein Ausführungsbeispiel, bei dem der Wulstverstärker 5 auf der Innenseite des Kernprofiles 6 zwischen den beiden Lagen der Reifenkarkasse 8 angeordnet ist.

Figur 5 zeigt ein Ausführungsbeispiel, bei dem der Wulstverstärker 5 auf der Außenseite des Kernprofiles 6 und der Außenseite der Reifenkarkasse 8 angeordnet ist.

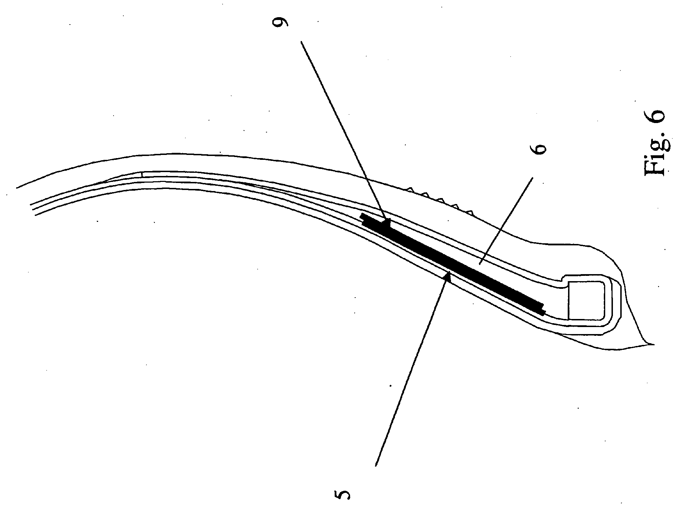

Figur 6 zeigt ein Ausführungsbeispiel mit einem Wulstverstärker 5, der auf einem faserverstärkten Gummistreifen 9 angeordnet ist, der wiederum direkt auf der Innenseite des Kernprofiles 6 anliegt.

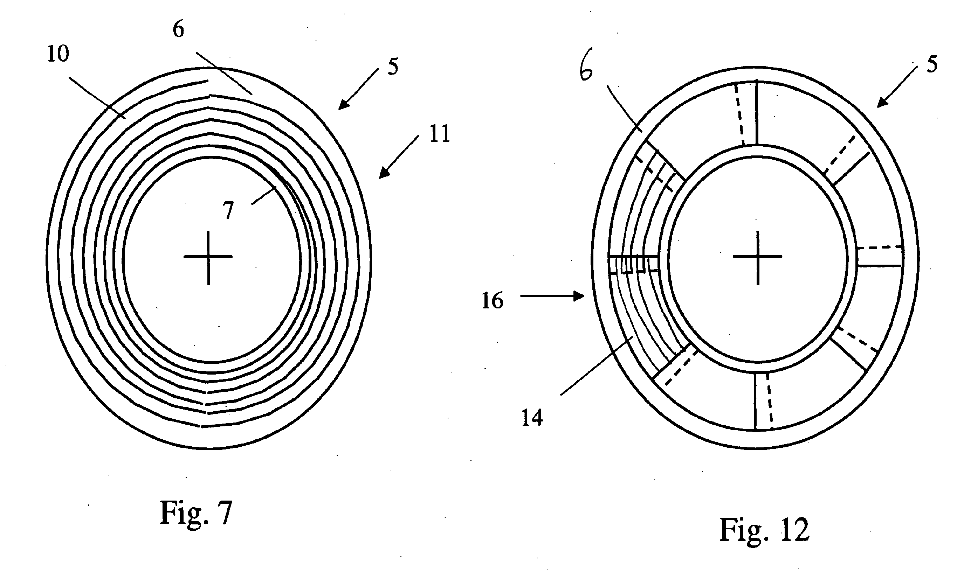

Figur 7 zeigt ein Ausführungsbeispiel mit einem Wulstverstärker 5, bei dem der Festigkeitsträger 10 in Form einer Spirale 11 auf dem Kernprofil 6 aufgewickelt ist. Diese Figur zeigt eine Aufsicht des Kernprofiles 6, der auf der radial innenliegenden Seite mit dem Wulstkern 7 in Verbindung steht. Das Kernprofil 6 hat im Wesentlichen die Form einer geschlossenen Ringscheibe, die aus einem Kautschukmaterial besteht. Nach der Konfektion des Kernprofiles 6, der mit dem Wulstkern 7 verbunden wird, erfolgt das Aufwickeln eines drahtförmigen Festigkeitsträgers 10. Der Festigkeitsträger 10 ist vorzugsweise koaxial mit einer Gummischicht beschichtet, um dadurch die Adhäsion mit dem Kernprofil 6 zu verbessern. Der Festigkeitsträger 10 wird - wie der Figur zu entnehmen ist - in Form einer Spirale 11 auf das Kernprofil 6 aufgewickelt. Diese Spirale 11 bildet als Einheit den Wulstverstärker 5. Vorzugsweise ist dabei der Steigungswinkel der Spirale 11 im radial innenliegenden Bereich, der zum Wulstkern 7 gerichtet ist, kleiner als im radial außenliegenden Bereich der Spirale 11. Ein wesentlicher Vorteil bei diesem Ausführungsbeispiel besteht darin, dass der Festigkeitsträger 10 mehrmals kontinuierlich um das Kernprofil 6 herumgeführt wird und dieser keiner Unterbrechungen aufweist. Nachdem das Kernprofil 6 mit dem Wulstverstärker 5 versehen wurde, wird der Verbund auf einer konventionellen Reifenaufbautrommel angeordnet und anschließend der Reifen in einem herkömmlichen Reifenaufbauprozess fertiggestellt.

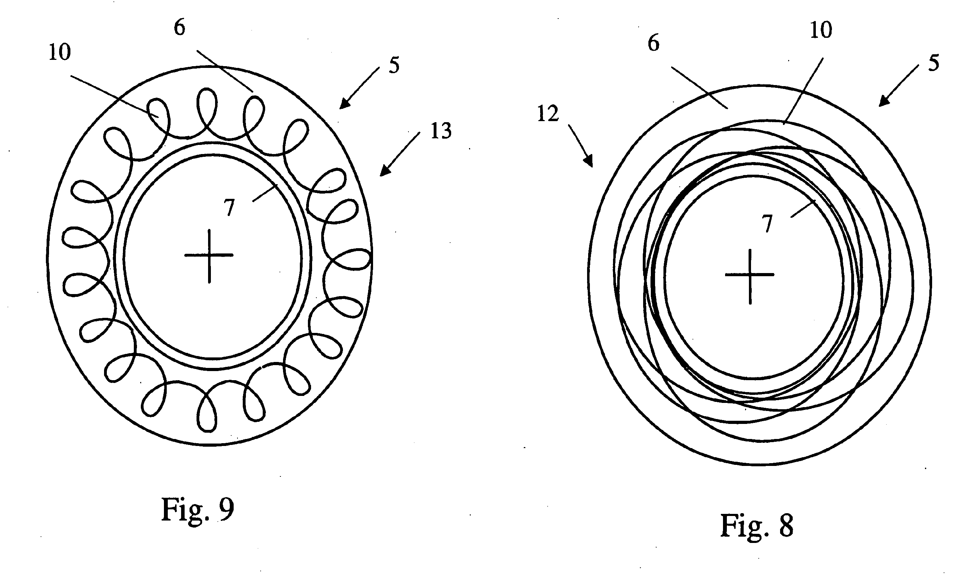

Figur 8 zeigt ein Ausführungsbeispiel mit einem Wulstverstärker 5, bei dem der Festigkeitsträger 10 in Form von Ellipsen 12 auf dem Kernprofil 6 aufgewickelt ist. Bei diesem Ausführungsbeispiel wird der Festigkeitsträger 10 ovalförmig bzw. in Form von Ellipsen 12 auf das Kernprofil 6 aufgewickelt, wodurch in der Aufsicht eine unregelmäßig erscheinende Struktur entsteht.

Figur 9 zeigt ein Ausführungsbeispiel mit einem Wulstverstärker 5, bei dem der Festigkeitsträger 10 in Form einer Spule 13 auf das Kernprofil 6 aufgewickelt ist. Der Festigkeitsträger 10 ist bei diesem Ausführungsbeispiel spulenartig um das Kernprofil 6 herumgeführt.

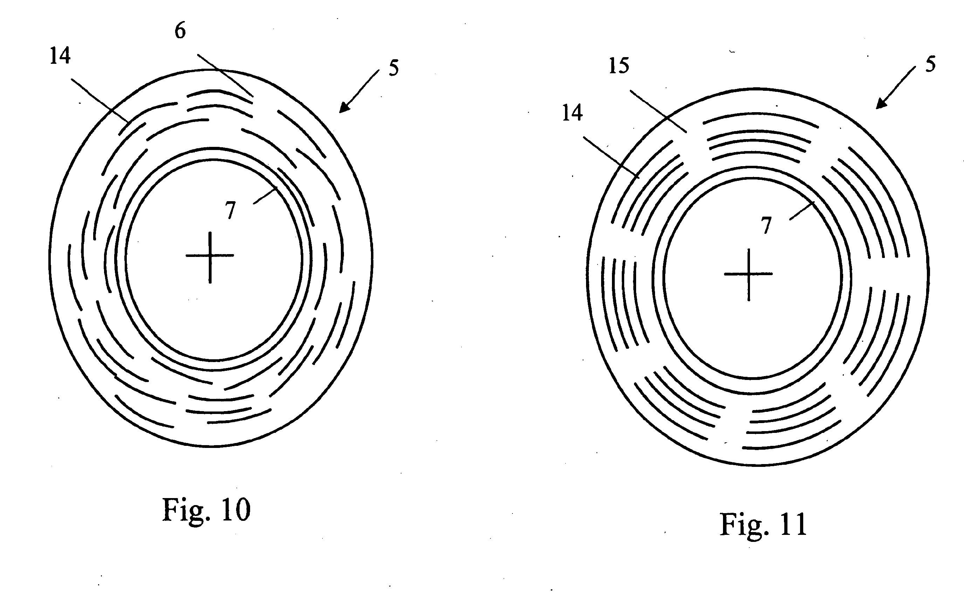

Figur 10 zeigt ein Ausführungsbeispiel mit einem Wulstverstärker 5, der aus ungeordneten Festigkeitsträgerabschnitten 14 besteht. Die Festigkeitsträgerabschnitte 14 liegen einzeln in einer ungeordneten Form am Kernprofil 6 an.

Figur 11 zeigt ein Ausführungsbeispiel mit einem Wulstverstärker 5, der aus geordneten Festigkeitsabschnitten 14 besteht. Bei diesem Ausführungsbeispiel sind die Festigkeitsabschnitte 14 in einer geordneten Form auf dem Kernprofil 6 angeordnet. Auf dem Kernprofil 6 entstehen durch diese Anordnungen Lücken 15, in denen keine Festigkeitsträgerabschnitte 14 liegen.

Figur 12 zeigt ein Ausführungsbeispiel, bei dem die Festigkeitsträgerabschnitte überlappend angeordnet sind. Die Festigkeitsträgerabschnitte 14 sind wiederum in Scharen 16 angeordnet. An den Übergangsstellen zwischen den Scharen 16 sind die Festigkeitsträgerabschnitte 14 sozusagen überlappend angeordnet.

### Bezugszeichenliste

### (ist Teil der Beschreibung)

- 1: Luftreifen
- 2: Seitenwand
- 3: Reifenkarkasse
- 4: Wulstbereich
- 5: Wulstverstärker
- 6: Kernprofil
- 7: Wulstkern
- 8: Reifenkarkasse
- 9: faserverstärkter Gummistreifen
- 10: Festigkeitsträger
- 11: Spirale
- 12: Ellipse
- 13: Spule
- 14: Festigkeitsträgerabschnitt
- 15: Lücke
- 16: Festigkeitsträgerabschnitt-Schar

## Patentansprüche

1. Fahrzeugluftreifen (1) mit einer Radialkarkasse (8), zwei Seitenwänden (2) und zwei Wulstbereichen (4) mit Wulstkernen (7) sowie Kernprofilen (6), wobei der Wulstbereich (4) in Umfangsrichtung des Fahrzeugluftreifens (1) mit einem Wulstverstärker (5) aus Festigkeitsträgern (10) verstärkt ist,
wobei der Festigkeitsträger (10) direkt ohne eine Einbettung in einen Gummistreifen im Wulstbereich (4) angeordnet ist,
wobei der Festigkeitsträger (10) in Form einer aufgewickelten Spirale (11) am Kernprofil (6) anliegt,
**dadurch gekennzeichnet, dass**
der Steigungswinkel der Spirale (11) im radial innenliegenden Bereich kleiner ist als im radial außenliegenden Bereich der Spirale (11).

2. Fahrzeugluftreifen nach Anspruch 1,
**dadurch gekennzeichnet, dass**
der Festigkeitsträger (10) diskontinuierlich in einzelnen Festigkeitsträger-Abschnitten (14) am Kernprofil (6) anliegt.

3. Fahrzeugluftreifen nach Anspruch 1 oder 2,
**dadurch gekennzeichnet, dass**
die Festigkeitsträger-Abschnitte(14) mit regelmäßig angeordneten Lücken (15) auf dem Kernprofil (6) angeordnet sind.

4. Fahrzeugluftreifen nach einem der Ansprüche 1 bis 3,
**dadurch gekennzeichnet, dass**
die Festigkeitsträger-Abschnitte (14) an den Übergängen überlappend auf dem Kernprofil (6) angeordnet sind.

5. Fahrzeugluftreifen nach einem der Ansprüche 1 bis 4,
**dadurch gekennzeichnet, dass**
der Festigkeitsträger (10) auf einer faserverstärkten Gummilage (9) angeordnet ist.

6. Fahrzeugluftreifen nach einem der Ansprüche 1 bis 5,
**dadurch gekennzeichnet, dass**
der Wulstverstärker (5) im Wulstbereich (4) zwischen zwei Karkasslagen angeordnet ist.

## Claims

1. Pneumatic vehicle tyre (1) with a radial carcass (8), two sidewalls (2) and two bead regions (4) with bead cores (7) and bead fillers (6), the bead region (4) being reinforced in the circumferential direction of the pneumatic vehicle tyre (1) with a bead reinforcer (5) comprising reinforcing elements (10), the reinforcing element (10) being arranged directly in the bead region (4) without being embedded in a rubber strip and the reinforcing element (10) lying against the bead filler (6) in the form of a wound-up spiral (11), **characterized in that** the helix angle of the spiral (11) is smaller in the radially inner region than in the radially outer region of the spiral (11).

2. Pneumatic vehicle tyre according to Claim 1, **characterized in that** the reinforcing element (10) lies discontinuously against the bead filler (6) in individual reinforcing element portions (14).

3. Pneumatic vehicle tyre according to Claim 1 or 2, **characterized in that** the reinforcing element portions (14) are arranged on the bead filler (6) with regularly arranged gaps (15).

4. Pneumatic vehicle tyre according to one of Claims 1 to 3, **characterized in that** the reinforcing element portions (14) are arranged on the bead filler (6) such that they overlap at the transitions.

5. Pneumatic vehicle tyre according to one of Claims 1 to 4, **characterized in that** the reinforcing element (10) is arranged on a fibre-reinforced rubber ply (9).

6. Pneumatic vehicle tyre according to one of Claims 1 to 5, **characterized in that** the bead reinforcer (5) is arranged in the bead region (4) between two carcass plies.

## Revendications

1. Bandage pneumatique (1) pour roue de véhicule, qui présente une carcasse radiale (8), deux parois latérales (2) et deux zones de bourrelet (4) dotées d'âmes de bourrelet (7) et de profilés de bourrelet (6),
la zone de bourrelet (4) étant renforcée dans la direction périphérique du bandage pneumatique (1) pour roue de véhicule par un renfort de bourrelet (5) constitué de renforts (10),
le renfort (10) étant disposé directement dans la zone de bourrelet (4) sans être incorporé dans une bande de caoutchouc,
le renfort (10) reposant contre le profilé d'âme (6) sous la forme d'une spirale enroulée (11),
**caractérisé en ce que**
l'angle de pas de la spirale (11) dans la zone située radialement à l'intérieur est plus petit que cet angle dans la partie de la spirale (11) située radialement à l'extérieur.

2. Bandage pneumatique pour roue de véhicule selon la revendication 1, **caractérisé en ce que** le renfort (10) repose de manière discontinue en différents tronçons (14) de renfort sur le profilé d'âme (6).

3. Bandage pneumatique pour roue de véhicule selon les revendications 1 ou 2, **caractérisé en ce que** les parties (14) de renfort sont disposées à des intervalles (15) réguliers sur le profilé d'âme (6).

4. Bandage pneumatique pour roue de véhicule selon l'une des revendications 1 à 3, **caractérisé en ce qu'**à l'emplacement des transitions, les parties (14) de renfort sont disposées en superposition sur les profilés d'âme (6).

5. Bandage pneumatique pour roue de véhicule selon l'une des revendications 1 à 4, **caractérisé en ce que** le renfort (10) est disposé sur une couche (9) de caoutchouc renforcé par des fibres.

6. Bandage pneumatique pour roue de véhicule selon l'une des revendications 1 à 5, **caractérisé en ce que** le renfort de bourrelet (5) est disposé entre deux couches de carcasse dans la zone de bourrelet (4).
